# EUROPÄISCHE PATENTANMELDUNG

(11) **EP 0 917 386 A1**
(43) Veröffentlichungstag der Anmeldung: **19.05.1999**
(21) Anmeldenummer: 97120099.3
(22) Anmeldetag: 17.11.1997
(51) Int. Cl.: H04Q 11/04, H04Q 3/62

(54) **Verfahren und Vermittlungsprozess zur Steuerung von Verbindungen**

(71) Anmelder: SIEMENS AKTIENGESELLSCHAFT, 80333 München (DE)
(72) Erfinder: Röthlingshöfer, Hans, Dipl.-Ing., 82024 Taufkirchen (DE)

(57) **Zusammenfassung**

Die Erfindung betrifft ein Verfahren zur Steuerung von Verbindungen, das in einer Vermittlungsstelle (LE) abläuft, an die mindestens ein Teilnehmeranschluß-Netz (AN) angeschlossen ist. Erfindungsgemäß wird in der LE entschieden, ob eine Verbindung AN-intern geschaltet wird oder über die LE. Dadurch können für einen Großteil der Verbindungen die Vorteile der AN-internen Durchschaltung genutzt werden.

## Beschreibung

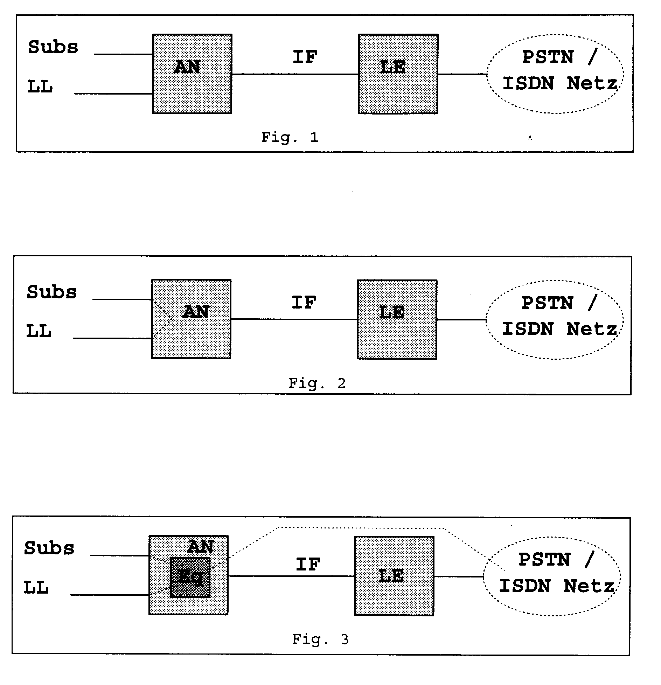

Fig. 1 zeigt eine Netzanschluß-Struktur, die der Erfindung zugrunde liegt. An einem Teilnehmeranschluß-Netz (z.B. "DLU (Digital Line Unit)" bei dem Vermittlungssystem EWSD der Siemens AG oder "access network", im folgenden mit AN bezeichnet) sind sowohl Teilnehmer (analoge Teilnehmer, ISDN basic access, Nebenstellenanlagen etc., im folgenden mit Subs bezeichnet) und Anschlüsse zu anderen Netzen (z.B. Leased Lines, im folgenden mit LL bezeichnet) angeschlossen als auch mindestens ein Interface (im folgenden mit IF bezeichnet) zu einer Vermittlungsstelle ("local exchange", im folgenden mit LE bezeichnet).

Dieses IF kann ein genormtes Protokoll (z.B. entsprechend ETSI ETS 300 347-1, "V5.2-Interface") oder ein firmen- oder anwendungsspezifisches Protokoll (z.B. "V93" bei EWSD) verwenden. Die Vermittlungsstelle (LE) ist wiederum mit dem analogen oder digitalen Kommunikationsnetz (im folgenden mit PSTN/ISDN Netz bezeichnet) verbunden. Das IF stellt eine logische Trennung zwischen AN und LE dar.

Das AN beinhaltet u.a. den physikalischen Teilnehmeranschluß. Die LE ist für den vermittlungstechnischen Service zuständig und steuert alle vermittlungstechnischen Einstellungen im AN mittels Nachrichten via IF (z.B. entsprechend ETSI ETS 300 347-1). Die LE unterhält für diese Steuerungsaufgabe eine entsprechende Tabelle (Einstelltabelle), die ein Abbild der Einstellungen des AN wiedergibt.

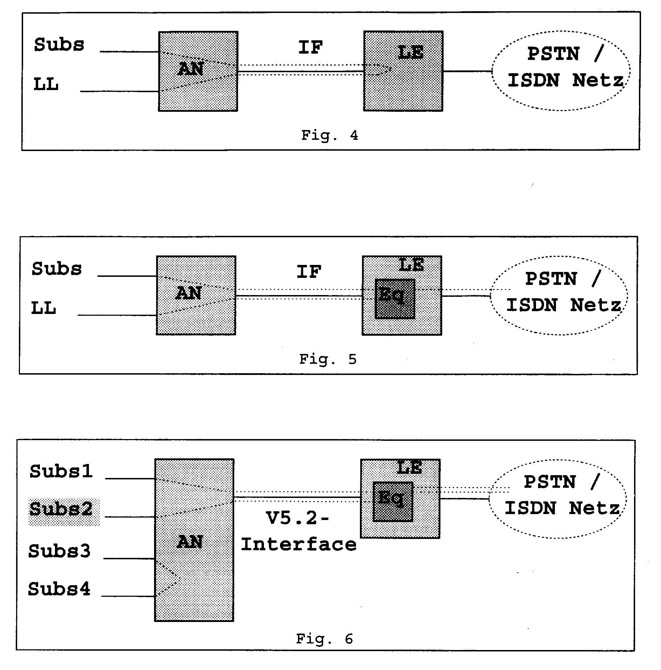

Würden nun (unter Steuerung der LE) im AN Verbindungen zwischen zwei oder mehreren Anschlüssen (Subs, LL) innerhalb des AN (AN-intern) durchgeschaltet, so würden auf dem IF dafür keine Ressourcen (z.B. Timeslots) belegt bzw. könnten nach Einstellung der AN-internen Verbindung wieder freigegeben werden. (Dies wäre der Vorteil solcher AN-interner Verbindungen). Fig. 2 zeigt ein Beispiel einer solchen AN-internen Verbindung.

Der Nachteil der genannten Lösung würde allerdings darin bestehen, daß das AN dann für solche internen Verbindungen auch alle Einrichtungen Eq (z.B. Konferenzfunktion) und evtl. (Netz-)Anschlüsse bereitstellen müßte. Fig. 3 zeigt als zughöriges Beispiel eine Konferenz-Verbindung mit mehr als zwei Endpunkten (dieser Fall ist insbesondere bei Richterlichem Mithören (Lawful Interception) gegeben).

Bisher wurden daher keine AN-internen Verbindungen geschaltet. Verbindungen von mehreren Anschlüssen (Subs, LL) eines AN wurden via IF immer im LE durchgeschaltet. Beispiel: Nach ETSI ETS 300 347-1 sind keine AN-internen Verbindungen möglich, die Verbindung solcher Anschlüsse erfolgt mittels "tromboning" via IF im LE. (Mit "tromboning" ist hier das Hin- und Zurückschleifen der Verbindung vom AN zur LE und zurück gemeint) siehe Fig. 4. Beispiel: Bei dem System EWSD werden ebenso derzeit in der DLU keine Verbindungen DLU-intern durchgeschaltet.

Der Erfindung liegt die Aufgabe zugrunde, den genannten Vorteil von AN-internen Verbindungen zu nutzen ohne dafür den genannten Nachteil in Kauf nehmen zu müssen.

Diese Aufgabe wird durch ein Verfahren gemäß Anspruch 1 bzw. einen Vermittlungsprozess nach Anspruch 3 gelöst.

Der Vorteil der Erfindung liegt darin, daß für einen Großteil der Verbindungen zweier Endpunkte an demselben AN die Vorteile der AN-internen Durchschaltung genutzt werden können, während für die Sonderfälle weiterhin die Einrichtungen Eq und (Netz-) Anschlüsse der LE genutzt werden und somit nicht zusätzlich im AN bereitgestellt werden müssen.

Im folgenden wird ein Ausführungsbeispiel der Erfindung näher erläutert.

Die Verbindung wird (wie oben beschrieben) immer von der LE (genauer gesagt durch den Vermittlungsprozess in der LE) gesteuert (Das setzt voraus, daß die LE die Signalisierungsnachrichten von den Endpunkten einer Verbindung erhält). Die LE wertet die in den Signalsierungsnachrichten und/oder die in LE-internen Daten enthaltenen Informationen aus (aus der Information 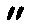 Rufnummer" und/oder der Information 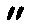 Anzahl der Endpunkte" läßt sich z.B. der Verbindungstyp (Internetverbindung, IN-Verbindung, Konferenzverbindung, Verbindung zwischen zwei AN-Anschlüssen, usw. ) ermitteln) und steuert in Abhängigkeit des Auswertungsergebnisses (z.B. in Abhängigkeit des ermittelten Verbindungs-Typs) die Verbindung unterschiedlich.

Erkennt nun eine LE beim Verbindungsaufbau (anhand der in den Signalisierungsnachrichten enthaltenen Information und/oder anhand LE-interner Daten) z.B., daß eine Verbindung zu mehr als zwei Endpunkten nötig ist oder daß zu der angeforderten Verbindung z.B. besondere, d.h. nicht im AN vorhandene Einrichtungen nötig sind, so schaltet die LE diese Verbindung nicht AN-intern, sondern mittels "tromboning" via IF im LE durch.
Dies geschieht wie folgt:
- Die LE veranlaßt, daß jeder in einem AN gelegene Endpunkt via IF zu ihr durchgeschaltet wird. Dabei werden je Endpunkt (Subs, LL) getrennte Ressourcen (z.B. Timeslots) auf dem IF belegt.
- Die Verbindung der Endpunkte erfolgt in der LE durch den Vermittlungsprozess unter Verwendung von Einrichtungen Eq (z.B. Koppelnetz, Konferenzfunktion) und evtl. (Netz-) Anschlüssen der LE.

Damit können für solche Verbindungen weiterhin alle Einrichtungen Eq und (Netz-) Anschlüsse der LE verwendet werden. Diese müssen also nicht zusätzlich im AN bereitgestellt werden. Siehe Fig. 5.

Erkennt eine LE beim Verbindungsaufbau z.B andererseits, daß eine Verbindung zu nur zwei Endpunkten des AN nötig ist, so wird die Verbindung AN-intern durchgeschaltet. Der Vermittlungsprozess sendet dazu entsprechende Einstellnachrichten an das AN.

Fig. 6 zeigt ein Beispiel mit zwei verschiedenen Verbindungen.
- Ein AN ist so in einem Ort gelegen, daß ein Großteil der Verbindungen zwischen je zwei Teilnehmern dieses AN hergestellt werden soll. Durch die AN-interne Verbindung dieser Teilnehmer kann die Anzahl der erforderlichen Timeslots auf dem V5.2-Interface (IF) gering gehalten werden. (siehe Verbindung für Subs3 und Subs4 in Fig. 6)
- Wird nun für einen der Teilnehmer am AN "Richterliches Mithören" angeordnet (d.h. eine entsprechende Information wurde in den LE-internen Daten gespeichert für Subs2 in Fig. 6), so wird jede Verbindung zu diesem Teilnehmer entsprechend der Erfindung via LE hergestellt, wobei dann die Einrichtungen Eq und Anschlüsse der LE genutzt werden können.

Die Beschreibung der Erfindung wurde durch eine Zeichnung unterstützt, die 6 Figuren umfaßt.

## Patentansprüche

1. Verfahren zur Steuerung von Verbindungen, das in einer Vermittlungsstelle (LE) abläuft, an die mindestens ein Teilnehmeranschluß-Netz (AN) angeschlossen ist,
demgemäß
a)auch über das Teilnehmeranschluß-Netz initiierte Verbindungen durch die Vermittlungsstelle gesteuert werden,
b)in der Vermittlungsstelle entschieden wird, ob eine Verbindung Teilnehmeranschlußnetz-intern (durch-)geschaltet wird oder über die Vermittlungsstelle.

2. Verfahren nach Anspruch 1
**dadurch gekennzeichnet**, daß
über entsprechende Steuernachrichten an das Teilnehmeranschluß-Netz veranlaßt wird, daß eine Verbindung nur dann Teilnehmeranschlußnetz-intern durchgeschaltet wird, wenn festgestellt wird, daß sämtliche für die Durchschaltung der Verbindung benötigten Einrichtungen (Eq) im Teilnehmeranschluß-Netz vorhanden sind.

3. Vermittlungsprozess zur Steuerung von Verbindungen, wobei der Vermittlungsprozess in einer Vermittlungsstelle enthalten ist, an die mindestens ein Teilnehmeranschluß-Netz angeschlossen ist,
**dadurch gekennzeichnet**, daß
a)der Vermittlungsprozess auch über das Teilnehmeranschluß-Netz initiierte Verbindungen steuert,
b)der Vermittlungsprozess anhand der empfangenen Signalisierungsnachrichten und/oder anhand Vermittlungsstellen-interner Daten entscheidet, ob eine Verbindung über die Vermittlungsstelle oder Teilnehmeranschlußnetz-intern (durch-)geschaltet wird.

4. Vermittlungsprozess nach Anspruch 3
**dadurch gekennzeichnet**, daß
der Vermittlungsprozess über entsprechende Steuernachrichten an das Teilnehmeranschluß-Netz veranlaßt, daß eine Verbindung nur dann Teilnehmeranschluß-Netz-intern durchgeschaltet wird, wenn er feststellt, daß sämtliche für die Durchschaltung der Verbindung benötigten Einrichtungen (Eq) im Teilnehmeranschluß-Netz vorhanden sind, während er andernfalls die Verbindung via Interface (IF) in der Vermittlungsstelle durchschaltet und die Einrichtungen (Eq) der Vermittlungsstelle verwendet.
